(19) Europäisches Patentamt
European Patent Office
Office européen des brevets

(11) **EP 4 712 540 A1**

(12) **EUROPEAN PATENT APPLICATION**
published in accordance with Art. 153(4) EPC

(43) Date of publication:
**18.03.2026 Bulletin 2026/12**

(21) Application number: **24807346.2**

(22) Date of filing: **29.03.2024**

(51) International Patent Classification (IPC):
*H04W 24/02* (2009.01)    *H04W 24/04* (2009.01)
*G06N 20/00* (2019.01)

(52) Cooperative Patent Classification (CPC):
**G06N 20/00; H04W 24/02; H04W 24/04**

(86) International application number:
**PCT/KR2024/004056**

(87) International publication number:
**WO 2024/237465 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 KR 20230061803**

(71) Applicant: **LG Electronics Inc.**
**Yeongdeungpo-gu**
**Seoul 07336 (KR)**

(72) Inventors:
• **CHUNG, Jaehoon**
  **Seoul 06772 (KR)**
• **PARK, Haewook**
  **Seoul 06772 (KR)**
• **KANG, Jiwon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING/RECEIVING SIGNAL IN WIRELESS COMMUNICATION SYSTEM**

(57)    A method performed by a terminal in a wireless communication system, according to at least one of embodiments disclosed in the present specification, may comprise: configuring at least one artificial intelligence/machine learning (AI/ML) model related to multiple transmission and reception points (TRPs) for positioning; acquiring input data subsets on the basis of TRP subsets of the multiple TRPs; acquiring positioning information output from the at least one AI/ML model on the basis of the input data subsets; and transmitting a positioning-related report to a network on the basis of the positioning information, wherein the positioning-related report may include information on at least one of the TRP subsets or the input data subsets.

**FIG. 23**

**Description**

**TECHNICAL FIELD**

The present disclosure relates to a wireless communication system, and more particularly, to a method and apparatus for transmitting/receiving an uplink/downlink wireless signal in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

The present disclosure aims to provide a method for efficiently performing a wireless signal transmission and reception process and apparatus therefor.
Other objectives may be inferred from the following embodiments.

**TECHNICAL SOLUTION**

According to an aspect, a method performed by a user equipment (UE) in a wireless communication system may include configuring at least one artificial intelligence/machine learning (AI/ML) model related to a plurality of transmission and reception points (TRPs) for positioning, obtaining an input data subset based on a TRP subset from the plurality of TRPs, obtaining positioning information output from the at least one AI/ML model based on the input data subset, and transmitting a positioning-related report to a network based on the positioning information. The positioning-related report may include information about at least one of the TRP subset or the input data subset.
The UE may receive a TRP subset configuration from the network.
The TRP subset configuration may include at least one of a number of TRPs or TRP identification information.
Based on the TRP subset including a number of TRPs different from the number of TRPs included in the TRP subset configuration, the positioning-related report may include at least one of the number of TRPs included in the TRP subset or TRP identification information.
The UE may select the TRP subset from among a plurality of TRP subsets based on TRP subset identification information received from the network.
The TRP subset may be determined based on at least one of line-of-sight/non-line-of-sight (LoS/NLos) information about each TRP, a signal measurement for each TRP, a zone where the UE is located, or a number of TRPs detectable by the UE.
The UE may determine performance of the at least one AI/ML model based on the positioning information output from the at least one AI/ML model.
Based on the determined performance of the at least one AI/ML model being less than or equal to a threshold, the UE may transmit a message for a reconfiguration request for the TRP subset to the network.
Based on the reconfiguration request for the TRP subset including a change in a total number of TRPs included in the TRP subset, the message may further include a request for switching or updating of the at least one AI/ML model.
Based on a similarity between output distributions of the at least one AI/ML model before and after reconfiguration of the TRP subset being equal to or greater than a specific level, the at least one AI/ML model may be maintained.
According to another aspect, a computer-readable recording medium having a program for performing the above method recorded thereon may be provided.
According to another aspect, an apparatus for wireless communication may include a memory storing instructions, and a processor performing operations by executing the instructions. The operations of the processor may include configuring at least one AI/ML model related to a plurality of TRPs for positioning, obtaining an input data subset based on a TRP subset from the plurality of TRPs, obtaining positioning information output from the at least one AI/ML model based on the input data subset, and transmitting a positioning-related report to a network based on the positioning information. The positioning-related report may include information about at least one of the TRP subset or the input data subset.

The apparatus may further include a transceiver transmitting or receiving a wireless signal under control of the processor.

The apparatus may be a UE operating in a wireless communication system.

The apparatus may be a processing device configured to control a UE operating in a wireless communication system.

According to another aspect, a method performed by a network node in a wireless communication system may include transmitting, to a UE, a configuration for at least one AI/ML model related to a plurality of TRPs for positioning, transmitting a TRP subset configuration for the plurality of TRPs to the UE, and receiving a positioning-related report including positioning information from the UE. The positioning-related report may include information about at least one of an input data subset provided to the at least one AI/ML model to output the positioning information or a TRP subset related to the input data subset.

According to another aspect, a network node in a wireless communication system may include a memory storing instructions, and a processor performing operations by executing the instructions. The operations of the processor may include transmitting, to a UE, a configuration for at least one AI/ML model related to a plurality of TRPs for positioning, transmitting a TRP subset configuration for the plurality of TRPs to the UE, and receiving a positioning-related report including positioning information from the UE. The positioning-related report may include information about at least one of an input data subset provided to the at least one AI/ML model to output the positioning information or a TRP subset related to the input data subset.

The network node may be a base station (BS) or a node having a location management function (LMF).

## ADVANTAGEOUS EFFECTS

According to the disclosure, wireless signal transmission and reception may be efficiently performed in a wireless communication system.

Other effects may be inferred from the present disclosure.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) and ACK/NACK transmission and reception process.

FIG. 6 illustrates an exemplary physical uplink shared channel (PUSCH) transmission process.

FIG. 7 shows an example of a channel state information (CSI) related procedure.

FIG. 8 is a view for explaining a concept of artificial intelligence/machine learning (AI/ML)/deep learning.

FIGS. 9 to 12 show various AI/ML models of deep learning.

FIG. 13 is a diagram illustrating split AI inference.

FIG. 14 is a diagram illustrating a framework for 3GPP radio access network (RAN) intelligence.

FIGS. 15 to 17 illustrate AI model training and inference environments.

FIG. 18 is a diagram illustrating management of an AI/ML model in consideration of data distribution distortion according to an embodiment.

FIG. 19 is a diagram illustrating management of an AI/ML model in consideration of data distribution distortion and output performance degradation according to an embodiment.

FIG. 20 is a diagram illustrating management of an AI/ML model in consideration of UE mobility according to an embodiment.

FIG. 21 illustrates an example of TRP indices for positioning.

FIG. 22 is a diagram illustrating operations of a network and a UE according to an embodiment.

FIG. 23 is a diagram illustrating an operation of a UE according to an embodiment.

FIG. 24 is a diagram illustrating an operation of a network node according to an embodiment.

FIGS. 25 to 28 illustrate an example of a communication system 1 and wireless devices applied to the disclosure.

## DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least a part of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

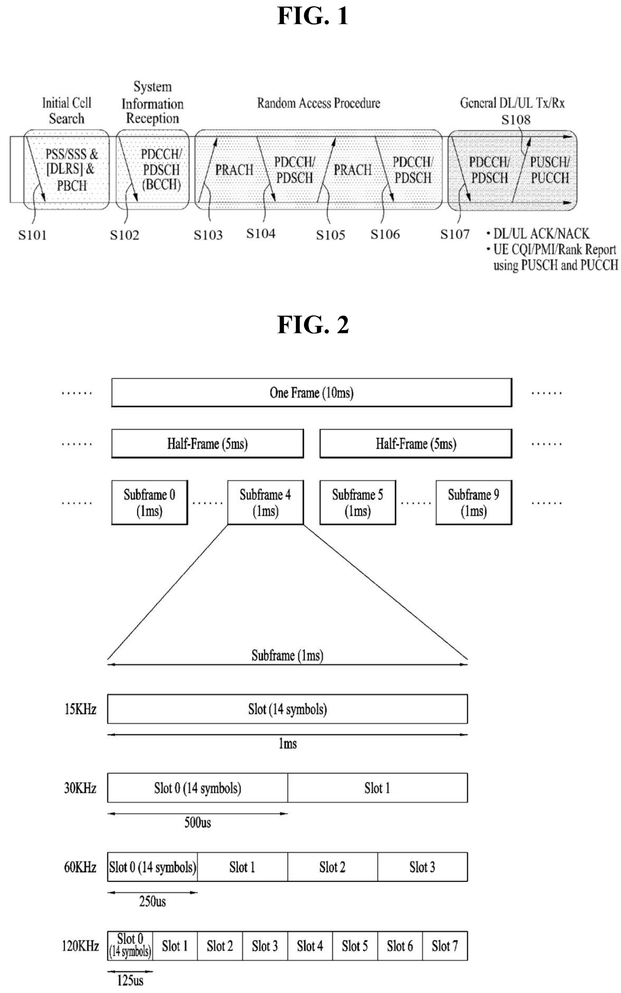

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

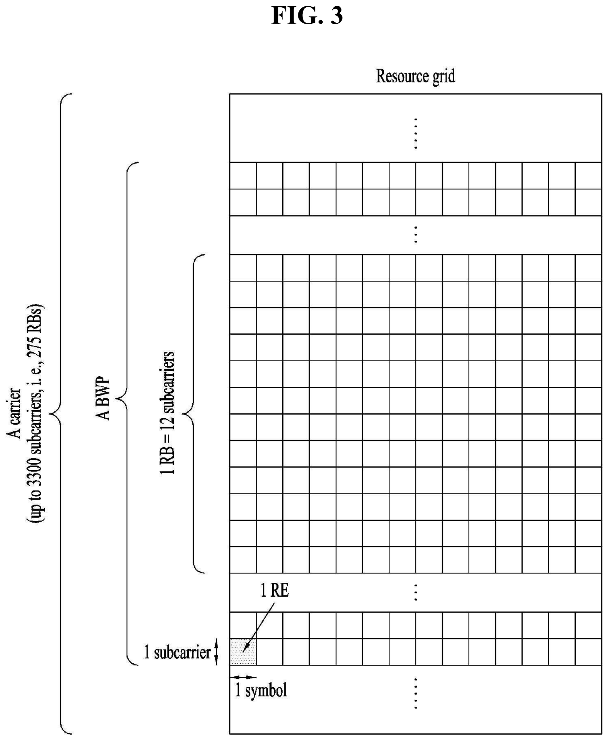

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

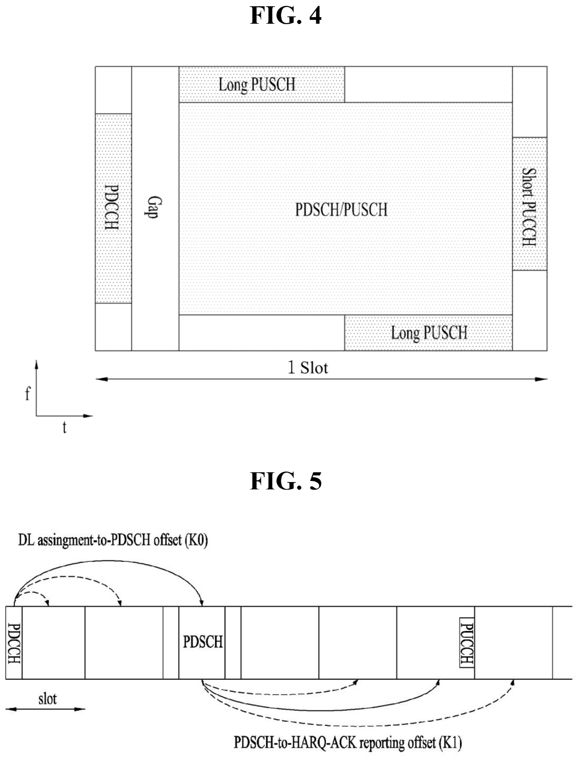

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

   * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|------|--------------|------|----------|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{\text{symb}}^{\text{PUCCH}}$ | Number of bits | Usage | Etc |
|---|---|---|---|---|
| 0 | 1-2 | $\leq 2$ | HARQ, SR | Sequence selection |

(continued)

| PUCCH format | Length in OFDM symbols $N_{\text{symb}}^{\text{PUCCH}}$ | Number of bits | Usage | Etc |
|---|---|---|---|---|
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as a HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by a HARQ process ID.

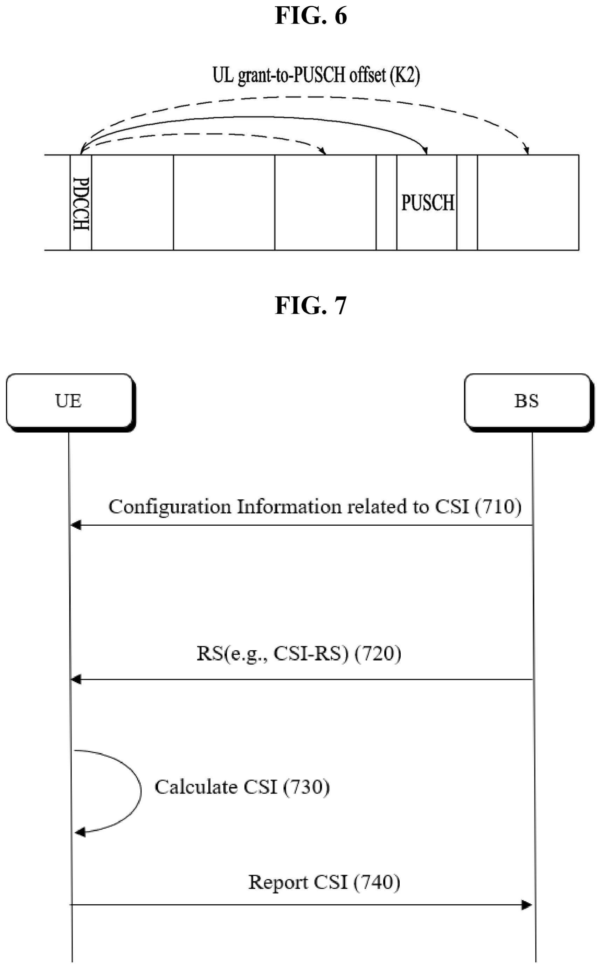

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook (e.g., PMI codebook) defined in the NR specifications may be broadly classified into a Type I codebook and a Type II codebook. The Type I codebook mainly targets single user MIMO (SU-MIMO) that supports both a high order and a low order. The Type II codebook primarily supports multi-user MIMO (MU-MIMO), which is capable of handling a maximum of two layers. While the Type II codebook is capable of providing more accurate CSI compared to Type I, the Type II codebook may also increase signaling overhead. On the other hand, an Enhanced Type II codebook is introduced to address the CSI overhead issues associated with the existing Type II codebook. The Enhanced Type II codebook may reduce the payload of the codebook by considering the correlation in the frequency domain.

CSI reporting over a PUSCH may be configured as Part 1 and Part 2. Part 1 has a fixed payload size and is used to identify the number of information bits in Part 2. Part 1 is fully transmitted before Part 2.

- For the Type I CSI feedback, Part 1 includes an RI (if reported), a CRI (if reported), and the CQI of a first codeword. Part 2 includes a PMI, and when RI > 4, Part 2 also includes the CQI.
- For the Type II CSI feedback, Part 1 includes an RI (if reported), a CQI, and an indication of the number of non-zero WB amplitude coefficients for each layer of Type II CSI. Part 2 includes the PMI of the Type II CSI.
- For the Enhanced Type II CSI feedback, Part 1 includes an RI (if reported), a CQI, and an indication of the total number of non-zero WB amplitude coefficients for all layers of Enhanced Type II CSI. Part 2 includes the PMI of the Enhanced Type II CSI.

For the PUSCH, CSI reporting includes two parts. If the CSI payload to be reported is smaller than a payload size provided by PUSCH resources allocated for CSI reporting, the UE may drop parts of the Part 2 CSI.

Semi-persistent CSI reporting performed with PUCCH format 3 or 4 supports Type II CSI feedback but supports only Part 1 of Type II CSI feedback.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of TCI-state configurations may be configured in the UE through a higher layer parameter PDSCH-Config. Each TCI-state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

## Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

An LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTADOA positioning.
- Reporting of General Error Situations. This function allows reporting of general error situations, for which function-specific error messages have not been defined.

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

## OTDOA (Observed Time Difference Of Arrival)

OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

## E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

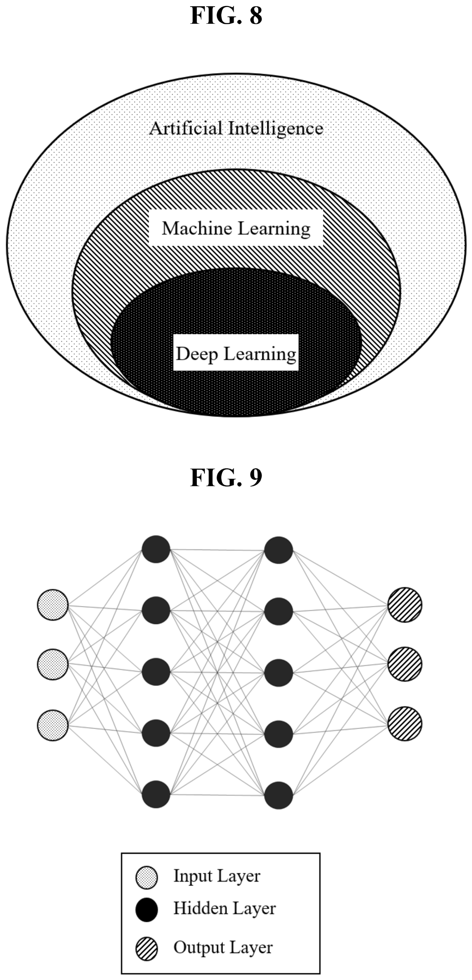

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

Classification of types of AI/ML according to various references

1. Offline vs Online

(1) Offline Learning: This complies with a sequential procedure of database collection, learning, and prediction. In other words, collection and learning are performed offline, and the completed program may be installed in the field and used for prediction. In most situations, this offline learning method is used. In offline learning, the system does not learn incrementally. Instead, learning is performed using all available collected data, and the results are applied without further learning. If learning on new data becomes necessary, learning may be initiated again using new complete data.
(2) Online Learning: Online learning is a method of improving performance little by little by incrementally learning with additionally generated data based on the fact that data to be used for learning is continuously generated recently through the Internet. Real-time learning is performed on specific units of data (batches) collected online, thereby allowing the system to quickly adapt to varying data.

To build an AI system, learning may be performed solely through online learning using only data generated in real-time. Alternatively, after conducting offline learning using a specific data set, additional learning may be performed using subsequently generated real-time data (online + offline learning).

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.
(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.

(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.

(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.

(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

AI/ML models

FIG. 9 shows an example of a feed-forward neural network (FFNN) AI/ML model. Referring to FIG. 9, the FFNN AI/ML model includes an input layer, a hidden layer, and an output layer.

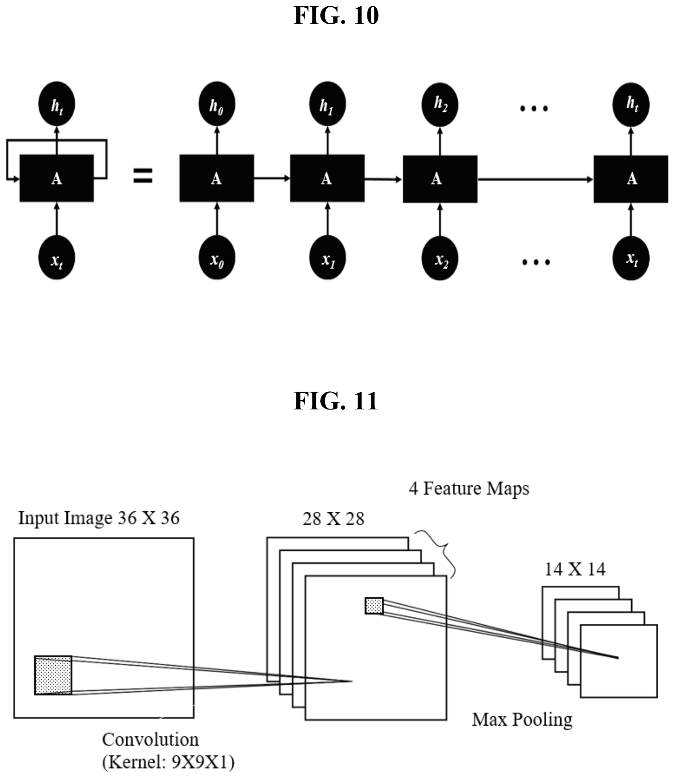

FIG. 10 shows an example of a recurrent neural network (RNN) AI/ML model. Referring to FIG. 10, the RNN AI/ML model is a type of artificial neural network in which a hidden node is connected to a directed edge to form a directed cycle and is an AI/ML model suitable for processing sequentially appearing data such as voice or text. One type of the RNN is a long short-term memory (LSTM), and the LSTM is a structure in which a cell-state is added to a hidden state of the RNN. In detail, in the LSTM, an input gate, a forget gate, and an output gate are added to the RNN cell, and a cell state is added. In Equation 10, A represents a neural network, $x_t$ denotes an input value, and $h_t$ denotes an output value. Here, $h_t$ may represent the current state value based on time, while $h_{t-1}$ may represent the previous state value.

FIG. 11 shows a convolution neural network (CNN) AI/ML model. The CNN is used for two purposes including reduction in AI/ML model complexity and extraction of good features by applying convolution computation commonly used in a video processing or image processing field. Referring to FIG. 11, a kernel or a filter means a unit/structure that applies a weight to an input in a specific range/unit. The kernel (or filter) may be modified through learning. A stride is a movement range in which the kernel is moved within the input. A feature map is the result of applying a kernel to an input. Padding refers to a value added to adjust the size of the feature map. To encourage robustness against distortion and changes, multiple feature maps may be extracted. Pooling refers to computation (e.g., max pooling or average pooling) to reduce the size of the feature map by downsampling the feature map.

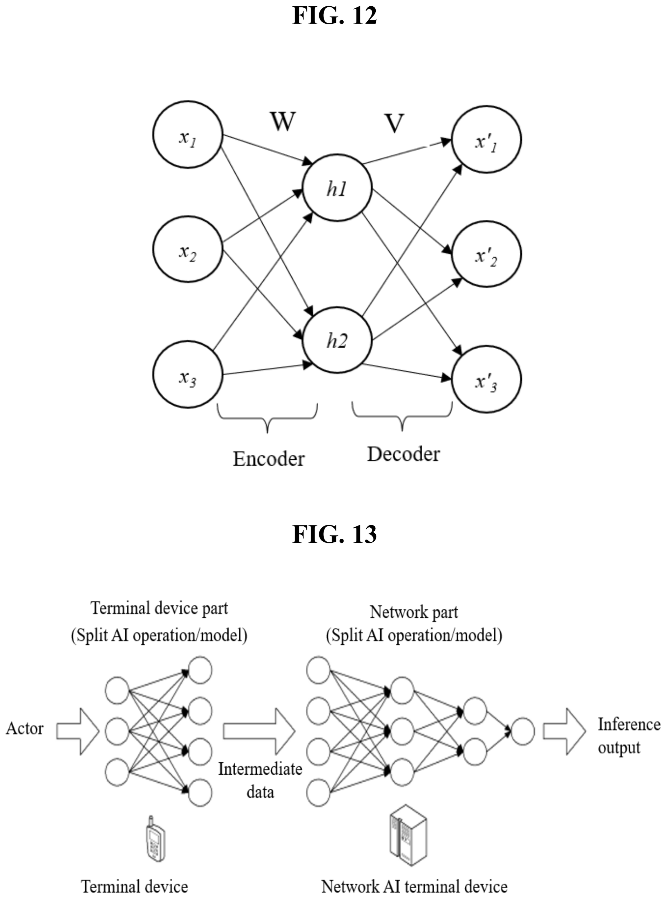

FIG. 12 shows an auto-encoder AI/ML model. Referring to FIG. 12, the auto-encoder is a neural network that receives a feature vector x and outputs the same or similar vector x' and a type of unsupervised learning with input and output nodes having the same feature. An autoencoder reconstructs the input, and thus, the output may be referred to as reconstruction. A loss function may be represented according to Equation 1 below.

[Equation 1]

$$\arg \min_{W,V} \left\| x - g\big(f(x)\big) \right\|^2 , where\ \mathbf{h} = \mathrm{f}(\mathbf{x}) = \mathbf{Wx}, \mathbf{x}' = \mathrm{g}(\mathbf{h}) = \mathbf{Vh}$$

In Equation 12, the loss function of the autoencoder is calculated based on the difference between the input and output. Based on the loss function of the autoencoder, the degree of loss in the input is assessed, and an optimization process is applied to the autoencoder to minimize the loss.

FIG. 13 is a diagram illustrating split AI inference.

FIG. 13 illustrates a case where a model inference function is collaboratively performed between an end devices such as a UE and a network AI/ML endpoint during the split AI operation.

In addition to the model inference function, a model training function, actor, and data collection function may each be split into multiple parts based on the current task and environment. These functions may be executed through the collaboration of multiple entities.

For example, computation-intensive and energy-intensive parts may be performed at the network endpoint, while privacy-sensitive and latency-sensitive parts may be executed on the end device. In this case, the end device executes tasks/models up to a specific part/layer based on input data and then transmits intermediate data to the network endpoint. The network endpoint executes the remaining parts/layers and provides inference outputs to one or more devices performing the operations/tasks.

The following describes a functional framework for AI operations.

Herein, the following terms may be defined for more detailed explanations of AI (or AI/ML).

- Data collection: Data collected from network nodes, management entities, or UEs, which serves as the foundation for AI model training, data analysis, and inference.
- AI model: A data-driven algorithm where AI techniques are applied to generate a set of outputs, including predictive information and/or decision parameters, based on a set of inputs.
- AI/ML training: An online or offline process of training an AI model by learning features and patterns to best represent data and obtain an AI/ML model trained for inference.
- AI/ML inference: A process that uses a trained AI model to make predictions or derive decisions based on collected data and the AI model.

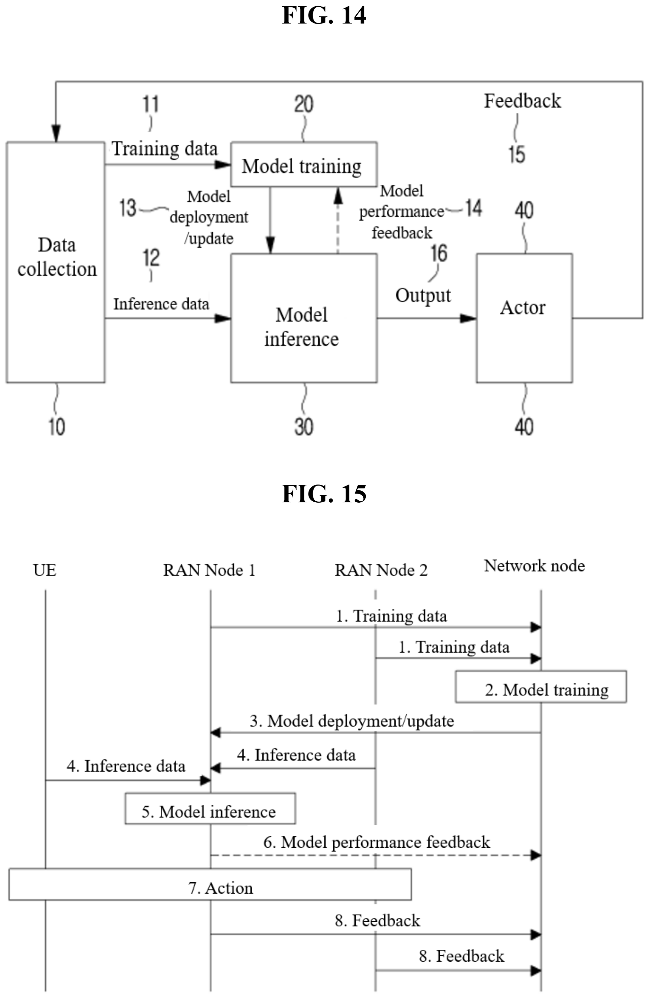

Referring to FIG. 14, a data collection function 10 collects input data and provides the processed input data to a model training function 20 and a model inference function 30.

For example, the input data may include measurements from UEs or other network entities, feedback from actors, and outputs from AI models.

The data collection function 10 performs data preparation based on the input data and provides the input data processed through the data preparation. Here, the data collection function 10 does not perform specific data preparation (e.g., data pre-processing and cleaning, forming, and transformation) for each AI algorithm, but the data collection function 10 may perform data preparation common to AI algorithms.

After completing the data preparation process, the data collection function 10 provides training data 11 to the model training function 20 and provides inference data 12 to the model inference function 30. Here, the training data 11 is input data required for the AI model training function 20. The inference data 12 is input data required for the AI model inference function 30.

The data collection function 10 may be performed by a single entity (e.g., UE, RAN node, network node, etc.) or by multiple entities. In this case, the training data 11 and inference data 12 may be provided to the model training function 20 and model inference function 30 respectively from multiple entities.

As part of the AI model testing procedure, the model training function 20 is responsible for performing AI model training, validation, and testing necessary to generate model performance metrics. If necessary, the model training function 20 may handle data preparation (e.g., data pre-processing and cleaning, forming, and transformation) based on the training data 11 provided by the data collection function 10.

Here, a model deployment/update 13 is used to initially deploy the trained, validated, and tested AI model to the model inference function 30 or to provide the updated model to the model inference function 30.

The model inference function 30 is responsible for providing an AI model inference output 16 (e.g., predictions or decisions). If applicable, the model inference function 30 may also provide model performance feedback 14 to the model training function 20. Additionally, the model inference function 30 may handle data preparation (e.g., data pre-processing and cleaning, forming, and transformation) based on the inference data 12 provided by the data collection function 10 if necessary.

Here, the output 16 refers to the inference output of the AI model generated by the model inference function 30, and the details of the inference output may vary depending on the use case.

The model performance feedback 14 may be used to monitor the performance of the AI model when available. However, the feedback may be omitted.

An actor function 40 receives the output 16 from the model inference function 30 and triggers or performs related tasks/operations. The actor function 40 may trigger tasks/operations for other entities (e.g., one or more UEs, one or more RAN nodes, one or more network nodes, etc.) or for itself.

Feedback 15 may be used to derive the training data 11 and inference data 12 or to monitor the performance of the AI model, the impact on the network, and so on.

The definitions of training, validation, and testing in a data set used in AI/ML may be distinguished as follows:

- Training data: The training data refers to a data set used for training a model.
- Validation data: The validation data refers to a data set used to validate a model that has already been trained. In other words, the validation data means a data set used to prevent overfitting of a typical training data set.

Additionally, the validation data refers to a data set used to select the best model among several trained models during the training process. Thus, the validation data may also be considered a type of learning.

- Test data: The test data refers to a data set used for final evaluation. The test data is independent of training.

In the case of the aforementioned data set, it is common to split a training set such that the training data and validation data are divided in a ratio of 8:2 or 7:3. When the test data is included, the training data, validation data, and test data may be divided in a ratio of 6:2:2 (training: validation: test).

Collaboration levels may be defined as follows, depending on the capability of the AI/ML functions between the BS and UE. It is also possible to combine multiple levels or to modify the levels by separating any one level.

Cat 0a) No Collaboration Framework: AI/ML algorithms are purely implementation-based and do not require changes to a wireless interface.

Cat 0b) This level involves a modified wireless interface suitable for efficient implementation-based AI/ML algorithms, but the level corresponds to a framework without collaboration.

Cat 1) Support between nodes is provided to enhance the AI/ML algorithm of each node. This level is applied when the UE receives support from the gNB (for training, adaptation, etc.), and vice versa. At this level, model exchange between network nodes is not required.

Cat 2) Collaborative ML tasks may be performed between the UE and gNB. This level requires the exchange of AI/ML model commands between network nodes.

The functions illustrated in FIG. 14 may be implemented in RAN nodes (e.g., BSs, TRPs, central units (CUs) of BSs), network nodes, operation administration maintenance (OAM) of network operators, or UEs.

Alternatively, two or more entities among the RAN nodes, network nodes, OAM of network operators, or UEs may collaborate to implement the functions illustrated in FIG. 14. For example, one entity may perform some of the functions in FIG. 14, while another entity may perform the remaining functions. In this way, if some of the functions illustrated in FIG. 14 are performed by a single entity (e.g., a UE, RAN node, or network node), the transfer/provision of data/information between individual functions may be omitted. For instance, if the model training function 20 and model inference function 30 are performed by the same entity, the transfer/provision of the model deployment/update 13 and model performance feedback 14 may be omitted.

Alternatively, any one of the functions illustrated in FIG. 14 may be performed through collaboration between two or more entities among the RAN nodes, network nodes, OAM of network operators, or UEs. This may be referred to as the split AI operation.

FIG. 15 illustrates a scenario where the AI model training function is performed by a network node (e.g., a core network node, OAM of a network operator, etc.), while the AI model inference function is performed by RAN nodes (e.g., BSs, TRPs, or CUs of BSs).

Step 1: RAN node 1 and RAN node 2 transmit input data for AI model training (i.e., training data) to the network node. Here, RAN node 1 and RAN node 2 may transmit data collected from a UE (e.g., UE measurements related to the RSRP, RSRQ, or SINR of serving and neighboring cells, UE location, speed, etc.) to the network node.

Step 2: The network node trains an AI model using the received training data.

Step 3: The network node deploys/updates the AI model to RAN node 1 and/or RAN node 2. RAN node 1 (and/or RAN node 2) may continue to perform model training based on the received AI model.

For the sake of convenience in explanation, it is assumed that the AI model is deployed/updated only to RAN node 1.

Step 4: RAN node 1 receives input data for AI model inference (i.e., inference data) from the UE and RAN node 2.

Step 5: RAN node 1 performs the AI model inference using the received inference data to generate output data (e.g., predictions or decisions).

Step 6: If applicable, RAN node 1 may transmit model performance feedback to the network node.

Step 7: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 8: RAN node 1 and RAN node 2 transmit feedback information to the network node.

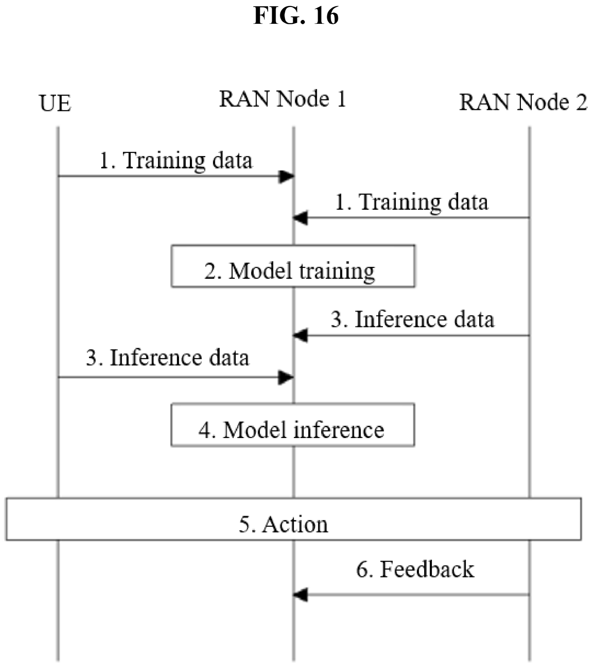

FIG. 16 illustrates a scenario where both the AI model training function and the AI model inference function are performed by RAN nodes (e.g., BSs, TRPs, or CUs of BSs).

Step 1: A UE and RAN node 2 transmit input data for AI model training (i.e., training data) to RAN node 1.

Step 2: RAN node 1 trains an AI model using the received training data.

Step 3: RAN node 1 receives input data for AI model inference (i.e., inference data) from the UE and RAN node 2.

Step 4: RAN node 1 performs the AI model inference using the received inference data to generate output data (e.g., predictions or decisions).

Step 5: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 6: RAN node 2 transmits feedback information to RAN node 1.

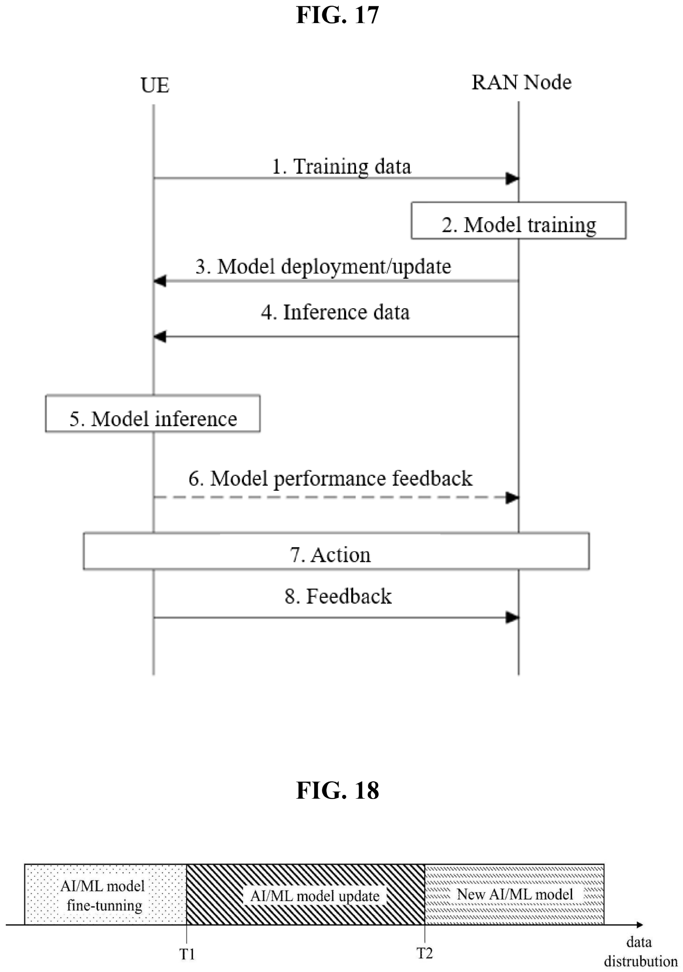

FIG. 17 illustrates a scenario where the AI model training function is performed by a RAN node (e.g., a BS, a TRP, or CUs of the BS), while the AI model inference function is performed by a UE.

Step 1: The UE transmits input data for AI model training (i.e., training data) to the RAN node. Here, the RAN node may collect data from various UEs and/or other RAN nodes (e.g., UE measurements related to the RSRP, RSRQ, or SINR of serving and neighboring cells, UE location, speed, etc.).

Step 2: The RAN node trains an AI model using the received training data.

Step 3: The RAN node deploys/updates the AI model to the UE. The UE may continue to perform model training based on the received AI model.

Step 4: The UE receives input data for AI model inference (i.e., inference data) from the RAN node (and/or from other UEs).

Step 5: The UE performs the AI model inference using the received inference data to generate output data (e.g., predictions or decisions).

Step 6: If applicable, the UE may transmit model performance feedback to the RAN node.

Step 7: The UE and RAN node perform actions based on the output data.

Step 8: The UE transmits feedback information to the RAN node.

## AI/ML Model Fine-Tuning/Update

A method for monitoring the performance degradation of an AI/ML model in a wireless interface for wireless communication and fine-tuning and updating the AI/ML model is proposed below.

In the current standardization of NR Rel-18, the following issues related to AI/ML are under discussion: CSI feedback improvement (e.g., overhead reduction, accuracy enhancement, and prediction), beam management (e.g., beam prediction in the time/spatial domain for overhead and latency reduction, and beam selection accuracy enhancement), and positioning accuracy enhancement (e.g., poor non-line-of-sight (NLOS) conditions).

For this purpose, an AI/ML model trained offline may be delivered to a UE and/or a BS to perform the operations described above. In this case, after the offline-trained AI/ML model is provided to an actual operating environment, a mismatch may occur between training data and field data (e.g., actual data in an environment where inference is performed) due to variables in various external situations. This may lead to the degradation of final output performance in each use case, when the AI/ML model is applied. To solve this problem, an operation of monitoring the performance degradation of an AI/ML model and updating the AI/ML model is discussed in the current standardization.

Use cases considered in the current Rel-18 AI/ML positioning standardization include direct AI/ML positioning and AI/ML assisted positioning. AI/ML assisted positioning may be performed in a 2-step optimization scheme of intermediate performance optimization and output performance optimization for a specific positioning technique. For AI/ML assisted positioning, discussions are ongoing regarding positioning performance evaluation and standardization needs based on an STRP/MTRP configuration. In the case of an MTRP configuration, an input to an AI/ML model includes channel measurement sets between N (N>1) TRPs and a target UE, and an output from the AI/ML model is represented as N set values according to a positioning technique. In this MTRP configuration, performance may degrade due to the difference between an environment where the offline-trained AI/ML model is applied and an environment where it is trained.

The robustness of an AI/ML model performance change in various wireless environments may be expressed as performance generalization. From the perspective of performance generalization, various approaches are considered, such as a method for monitoring a performance change of an AI/ML model, and when the performance is or is expected to be less than or equal to a specific level, fine-tuning/switching the AI/ML model.

Especially in the case of an MTRP configuration described below, the amount of an input from a plurality of TRPs is large, and each TRP experiences a different wireless condition. Moreover, not all N TRPs equally affect the output performance of the UE, but rather, AI/ML model parameters/structures related to specific n (n<N) TRPs may have a major influence.

The present disclosure proposes a method for monitoring and updating an AI/ML model in consideration of both AI/ML model input and (intermediate/final) output aspects, when AI/ML assisted positioning is performed in an MTRP configuration.

## Proposal 1

First, AI/ML model monitoring of a UE is proposed, which considers an AI/ML model input and (intermediate/final) output performance (through an MTRP configuration) is proposed.

### 1) Option 1: Monitoring Based on AI/ML Model Input

- The degree of distortion occurring between training and inference may be monitored based on a similarity check (e.g., MSE or mean/variance/standard deviation of distributions) between data distributions of an input and output of an AI/ML model. The data distributions of the input and output of the AI/ML model may refer to, but are not limited to, distributions of data sets related to a plurality of TRPs.
- Alternatively, an output performance degradation value may be monitored based on the difference between the data distributions.

### 2) Option 2: AI/ML Model Monitoring Based on UE Mobility

- A UE/TRP may monitor the location/environment of the UE and a related variation. For example, the UE may perform the monitoring based on a zone ID, a UE location, and so on. The TRP(s) may monitor an expected location of the UE and a related variation based on a measurement for the UE. For example, the configuration of the AI/ML model may be different for each zone.
- For example, a (corresponding) TRP pair may be determined based on an expected location of the UE and a related variation, and a mixed data set between the pair of TRPs may be configured for the AI/ML model, based on the UE location/environment. The mixed degree of the data set between the pair of TRPs may also be set based on the UE location/environment.

Proposal 1 may be used for monitoring the performance of an AI/ML model based on an MTRP configuration. Especially for AI/ML assisted positioning, methods for monitoring an AI/ML model based on intermediate performance and final output performance are under consideration, and the input of the AI/ML model may additionally be used for monitoring the performance of the AI/ML model.

For example, the data distribution of the input and/or output of the AI/ML model may be different from a data distribution when the AI/ML model was initially configured. AI/ML model monitoring may be performed based on the degree of distortion resulting from the difference between the data distribution.

A soft value (e.g., value(s) between 0 and 1) may be used to represent the difference/similarity between data distributions. For example, the UE may report the soft value to an AI/ML model monitoring entity (e.g., BS, LMF, or the like). Alternatively, since the (intermediate/final) output performance may change due to the distortion of the input data distribution, AI/ML model monitoring may be performed considering both simultaneously.

Alternatively, the performance of the AI/ML model may be monitored considering the mobility of the UE. For example, the monitoring may be performed based on information indicating that the UE is in a specific location/environment, or information about the specific location/environment of the UE predicted by considering the mobility of the UE. For example, the monitoring may be performed by identifying the zone ID of a zone in which the UE is currently located or the zone ID of a zone to which the UE is expected to move. A zone ID may be used with or substituted by a scenario ID, configuration ID, model ID, and so on. This method may be used when the TRP(s) is capable of identifying a specific or expected location of the UE based on measurements for the UE. Further, the positioning-related accuracy may be improved by feeding back the information about the location of the UE estimated by the TRP(s).

Further, when information about the location/mobility of the UE is used, a data set between a pair of TRPs related to the location/mobility of the UE may be configured in a mixed manner, thereby verifying improvement of the generalization performance of the AI/ML model and the validity of the output performance.

Further, considering an (absolute/relative) location proximity or mobility-incurred proximity between the UE and each TRP, the ratio of the data set of each TRP to the mixed data set may be determined, when configuring the mixed data set. For example, when the relative distances of the UE to TRP1 and TRP2 are 1:2, the UE is relatively closer to TRP 1. Accordingly, a higher weight may be given to the data set of TRP 1, such as by setting the ratio to 2:1 when configuring a mixed data set between TRP1 and TRP2. To this end, a training node or a data set-signaling node (e.g., LMF or the like) may be requested to reflect information related to the mix ratio of the data set.

## Proposal 2

In addition to Proposal 1, a method for updating an AI/ML model based on AI/ML model monitoring (through an MTRP configuration) will be described in Proposal 2.

### 1) For Option 1

- One or more thresholds may be set for a distortion-related value of the data distributions of the input and output of the AI/ML model, and the UE may request AI/ML model maintenance/fine-tuning/model request from the BS, separately according to the thresholds. For example, when the data distribution distortion is less than a first threshold, the UE may request one of AI/ML model maintenance, fine-tuning, and model request from the BS, and when the data distribution distortion is equal to or greater than the first threshold and less than a second threshold, the UE may request another one of AI/ML model maintenance, fine-tuning, and model request from the BS.
- Based on 2-step monitoring considering a data distribution distortion and a corresponding output performance degradation value, the UE may request AI/ML model maintenance/fine-tuning/model request from the BS according to one or more thresholds. For example, (i) when the data distribution distortion is less than a first threshold, and the output performance degradation value is less than a second threshold, the UE may request one of AI/ML model maintenance, fine-tuning, and model request from the BS. (ii) When the data distribution distortion is equal to or greater than the first threshold and less than a third threshold, and the output performance degradation value is equal to or greater than the second threshold, the UE may request another one of AI/ML model maintenance, fine-tuning, and model request from the BS.

### 2) For Option 2

- AI/ML model maintenance/fine-tuning/model request may be predefined/preconfigured according to the (expected/-specific) location of the UE and a related (expected/specific) environmental change (e.g., zone ID 1 → 2), and the UE may request an AI/ML model update method from the BS based on this.
- Alternatively, AI/ML model maintenance/fine-tuning/model request related to specific TRP(s) may be applied differentially depending on the (expected/specific) location and environment of the UE. For example, even if monitored performance for the specific TRP(s) is less than a threshold, when the location of the UE is far from the specific TRP(s) or the TRP(s) do not significantly affect the output performance of the UE, the priority for AI/ML model update may be lowered, or the existing AI/ML model may be continuously maintained without an update.

Contents to be updated according to the monitored performance may be determined differentially (e.g., model structure only, parameter only, or both).

As such, Proposal 2 is a method for updating an AI/ML model based on a single or multiple thresholds, when a performance change of the AI/ML model is detected through monitoring based on Proposal 1.

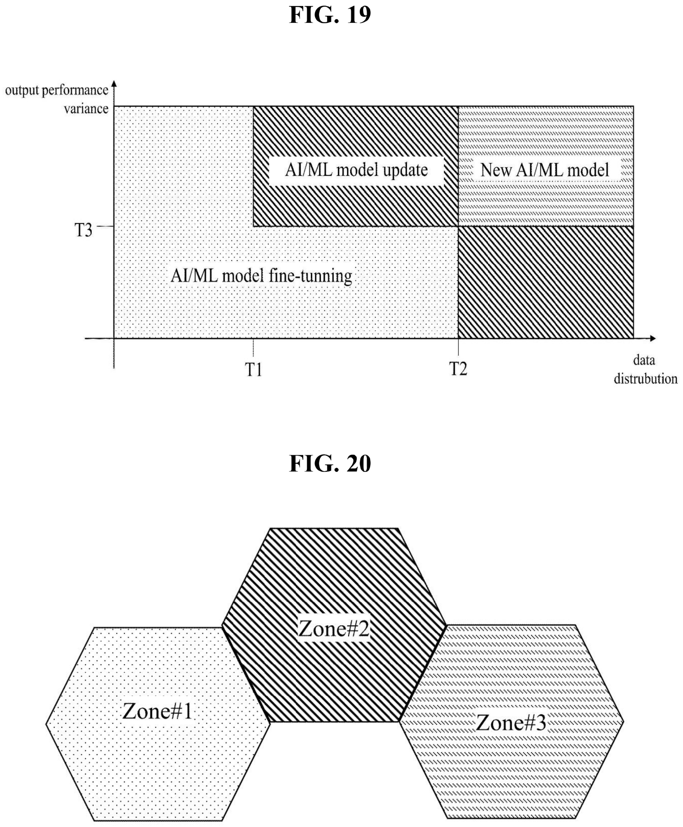

In Option 1, threshold(s) are set based on a distortion value of input and output data distributions, and an AI/ML model update may be performed accordingly. For example, referring to FIG. 18, it is assumed that there are two thresholds $T1<T2$, and the degree of data distribution distortion is X. When the distortion is small (e.g., $X \leq T1$), the current AI/ML model may be maintained. When $T1<X<T2$, an operation such as AI/ML model fine-tuning may be performed. When $T2<X$, an operation such as requesting a new AI/ML model may be performed. In another example, referring to FIG. 19, even if the degree of data distribution distortion is equal to or greater than a specific threshold (e.g., T1), the AI/ML model update may not be performed when a variation in final output performance is less than or equal to a specific threshold (e.g., T3), or the AI/ML model update may be performed in the opposite case.

In the case of Option 2, when the (expected/specific) location of the UE and a corresponding environment (e.g., zone ID) are used as a basis, or when a change occurs in them, an AI/ML model update-related operation may be performed based on this. For example, referring to FIG. 20, for a total of three zone IDs #1, #2, and #3, an AI/ML model update condition may be configured for each pair of zone IDs, and the UE may operate accordingly. For example, when zone ID #1 → zone ID #2, a first operation (e.g., AI/ML model maintenance) may be performed. When zone ID #1 → zone ID #3, a second operation (e.g., AI/ML model fine-tuning) may be performed. Alternatively, an AI/ML model update operation related to specific TRP(s) may be applied differentially based on the location and environment of the UE. For example, even if intermediate output or AI/ML model monitoring performance of the AI/ML model for the specific TRP(s) is equal to or less than a threshold, the AI/ML model may be maintained when the location or environment of the UE is far from the specific TRP(s) or the specific TRP(s) do not significantly affect the final output performance of the UE. On the contrary, even if the intermediate output or AI/ML model monitoring performance of the AI/ML model for the specific TRP(s) is equal to or greater than the threshold, an AI/ML model update/model request may be requested, when the final output performance of the UE is equal to or less than a threshold, or when the UE is predicted to be in a location with TRP(s) having poor monitoring performance due to UE mobility, or a change to a corresponding zone ID is expected. Herein, contents to be updated may be differentially applied considering the intermediate/output performance threshold and/or the input/output distribution distortion threshold.

In performing the above operations, it is necessary to distinguish an AI/ML model monitoring entity from a monitoring-based AI/ML model update entity. When the UE performs AI/ML monitoring and reports it to the BS, the BS may make a decision and transmit an AI/ML model update command to the UE. It is possible to differentiate an AI/ML model update method in the update command in applying the aforementioned options according to the level of monitoring performance reported by the UE. Further, when the BS provides a data set configuration to the UE for fine-tuning, an existing data set may be mixed with and a new data set or partially replaced. Alternatively, the BS may monitor the AI/ML model of the UE, and also transmit an AI/ML model update command to the UE according to the monitoring.

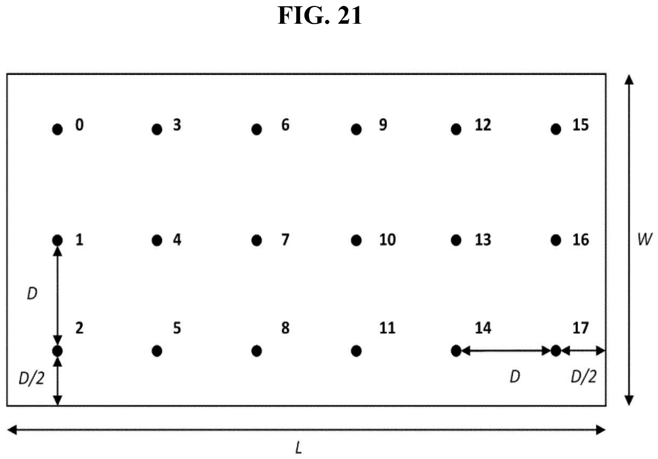

As discussed in the above proposals, an input to an MTRP-related AI/ML model may include a channel measurement set between N>1 TRPs and a target UE, and an output from the AI/ML model may be N set values according to an AI/ML technique. In this regard, a recent standardization meeting has agreed, as a relevant evaluation methodology, upon considering a TRP subset out of total TRPs for a model input or performing performance analysis of approaches of configuring an AI/ML model accordingly, as illustrated in Table 6. FIG. 21 is an example of TRP indices related to Agreement II of Table 6.

[Table 6]

| **Agreement I** |
|---|
| For the evaluation of AI/ML based positioning, the study of model input due to different number of TRPs include the following approaches. Proponent of each approach provide analysis for model performance, signaling overhead (including training data collection and model inference), model complexity and computational complexity. |
| * Approach 1: Model input size stays constant as $N1_{TRP}=18$. The number of TRPs ($N2_{TRP}$) that provide measurements to model input varies. When $N2_{TRP} < N1_{TRP}$, the remaining ($N1_{TRP} - N2_{TRP}$) TRPs do not provide measurements to model input, i.e., measurement value is set to 0. |
| - Approach 1-A. The set of TRPs ($N2_{TRP}$) that provide measurements is fixed. |
| - Approach 1-B. The set of TRPs ($N2_{TRP}$) that provide measurements can change dynamically. |
| - Note: for Approach 1, one model is provided to cover the entire evaluation area. |
| * Approach 2: The TRP dimension of model input is equal to the number of TRPs ($N2_{TRP}$) that provide measurements as model input. When $N2_{TRP} < N1_{TRP}$, the remaining ($N1_{TRP} - N2_{TRP}$) TRPs are ignored by the given model. For a given AI/ML model, the set of TRPs ($N2_{TRP}$) that provide measurements is fixed. |
| - For Approach 2: one model can be provided to cover the entire evaluation area, which is equivalent to deploying N'TRP TRPs in the evaluation area for positioning if ignoring the potential inference from the remaining ($18 - N2_{TRP}$) TRPs. |
| - For Approach 2, if $N_{model}$ ($N_{model} >1$) models are provided to cover the entire evaluation area, the total complexity (model complexity is the summation of the $N_{model}$ models. |

(continued)

| Agreement II |
| --- |
| In the evaluation of AI/ML based positioning, if $N2_{TRP}<18$, the set of $N2_{TRP}$ TRPs that provide measurements to model input of an AI/ML model are reported using the TRP indices. |

The main reason for this performance analysis is the problem that the amount of AI/ML model input information increases proportionally (e.g., linearly) to the number of TRPs, as a plurality of TRPs are considered. Further, since there may be a different wireless situation between each TRP and a target UE, not all N1 TRPs influence an AI/ML model output evenly, but rather, model input information related to specific N2 (N2<N1) TRPs may have a major influence, from the perspective of the target UE.

Although an AI/ML model monitoring method based on a full set of inputs for N1 TRPs to an AI/ML model and a corresponding output may be considered, when it is determined that using only a subset of inputs does not have a significant impact in terms of the output performance loss of the AI/ML model, compared to using the full set, the UE may report measurements for N2 TRPs instead of measurements for all N1 TRPs during reporting of measurements for positioning. Therefore, a gain may be expected in terms of signaling overhead involved in the measurement reporting of the UE.

To perform measurement reporting for a TRP subset in this way, information related to the value of N2 and N2 TRP index(es) should be shared between the UE and the BS, and a signaling procedure for this needs to be defined.

Therefore, a signaling method between the UE and the BS for configuring a subset of inputs for an MTRP-supporting AI/ML model, and an associated AI/ML model monitoring method are proposed.

Proposal 3: **Configuring Subset of Inputs for AI/ML Model (through MTRP Configuration)**

- The number N2 of TRPs in a TRP subset out of N1 TRPs determined/configured by a predetermined method (e.g., a line-of-sight/non-line-of-sight (LoS/NLoS) indication, the similarity between output distributions before and after an input distribution change, and so on), and associated TRP index(es) may be exchanged between the UE and the BS (and/or LMF).

Additionally, when there is a change in N2 and/or the associated TRP index(es), corresponding information may also be exchanged.

For example, the TRP index(es) related to N2 may be explicitly indicated, or the index of a preconfigured set of TRPs may be indicated.

Even if the network (e.g., BS and/or LMF) indicates an N2 value and/or associated TRP index(es), the UE may perform reporting corresponding to N3 (N3<N2) (according to a specific rule).

In this case, the UE may transmit an N3 value and/or associated TRP index(es) to the network (e.g., BS and/or LMF).

- Some or all of {N2, associated TRP index(es), and/or AI/ML model} may be configured to be the same/different depending on a specific scenario/zone ID or the like.

When the UE is related to the corresponding scenario/zone ID (e.g., when an event corresponding to the scenario is detected or when the UE is located in a corresponding zone), the UE may perform measurement reporting according to the previously configured {N2, associated TRP index(es), and/or AI/ML model}.

According to Proposal 3, in configuring an input for an AI/ML model for MTRP, an input subset may be configured based on N2 TRPs out of total N1 TRPs. For example, the number N2 of TRPs in the TRP subset, and/or associated TRP index(es) may be selected based on a predetermined method. In a specific example, a method may be used, such as selecting all or some of TRPs determined as LoS by LoS/NLoS indication information calculated by the UE or the network (e.g., BS and/or LMF), reflecting an input value related to specific TRP(s) as 0, or excluding it from the input dimension. N2 may be determined based on a subset of inputs for which the similarity of an output distribution according to a change in an input distribution is equal to or greater than a specific level.

The UE and the network (e.g., BS and/or LMF) may exchange information about N2 and/or the associated TRP index(es) through signaling between them. The transmitting and receiving sides of this information may be determined based on where the AI/ML model is located (the UE or the network). For example, when the AI/ML model is located at the UE and the UE performs measurement reporting through the AI/ML model, the UE may report information about N2 and/or the associated TRP index(es) to the network. The information about N2 and/or the associated TRP index(es) may be transmitted/received through separate signaling from the measurement report or together with the measurement report.

In an example of indicating the associated TRP index(es), the TRP index(es) themselves may be indicated, or they may be indicated by the index of a preconfigured TRP set, e.g., Set #1 = {TRP #1, TRP #2, TRP #3} and Set #2 = {TRP #4, TRP #5, TRP #6}.

Further, the UE may report N3 (e.g., N3<N2) and/or N3 TRP index(es) that are different from the indicated or calculated N2 value and/or N2 TRP index(es). For example, this UE operation may be performed in a rule-based manner. Specific examples of the UE operation may include i) the UE selects N3 (N3<N2) and/or associated TRPs based on a specific threshold (e.g., RSRP or first path delay), ii) the UE selects a specific fixed number and/or associated TRPs based on UE implementation, or iii) only N3 TRPs where N3 is smaller than the indicated/calculated N2 may be detectable by the UE depending on a UE environment. The UE needs to transmit information about N3 to the network (e.g., BS and/or LMF). Further, when the UE operates based on a specific scenario/zone ID, it may perform measurement reporting according to {N2, TRP index(es), AI/ML model} preconfigured for each scenario/zone ID.

Proposal 4: **Model Monitoring Based on Subset of Inputs for AI/ML Model (through MTRP Configuration**

Proposal 4 may be used to monitor an MTRP-supporting AI/ML model, when an input subset according to Proposal 3 is applied to the AI/ML model, to which the present disclosure is not limited.

- Case 1) When N2 and/or associated TRP index(es) are applied to the AI/ML model, and then monitoring result performance based on output performance at specific instance(s) or during a specific duration is less than or equal to a specific level, the UE may request reconfiguration of N2 and/or the associated TRP index(es) from the network (e.g., BS and/or LMF).

For example, since a change in N2 may be accompanied by AI/ML model switching/updating, the request for changing N2 may further include a request for an operation required for the AI/ML model switching/updating.

- Case 2) Even if an input distribution changes according to N2 and/or the associated TRP index(es), when the similarity between output distributions of the AI/ML model before and after the change is equal to or greater than a specific level, the UE may maintain the AI/ML model and N2 and/or the associated TRP index(es).
- In Case 1 and Case 2, some or all of {N2 change, TRP index(es) change, and/or AI/ML model change} may be performed for each threshold range defined by a plurality of thresholds based on the monitoring performance/output distribution similarity.

As in Case 1, in the case where the AI/ML model is operated by applying the indicated/calculated N2 and/or associated TRP index(es), when monitoring performance based on output performance at a specific single/multiple instance(s) or during a specific duration is less than or equal to a specific level or corresponds to a specific threshold range defined by the plurality of thresholds, the UE may request reconfiguration of some or all of N2 and/or the associated TRP index(es) from the network (e.g., BS and/or LMF).

Since the change in N2 may be related to switching/updating of the AI/ML model, the reconfiguration request of the UE may further include request information related to the model switching/updating.

In Case 2, even if the input distribution of the AI/ML model changes due to a change in an input subset configuration according to N2 and/or the associated TRP index(es), when the calculated similarity between the output distributions of the model before and after the change is equal to or greater than a specific level, information related to the AI/ML model and the input subset may be maintained at least partially without change. When the calculated similarity between the output distributions corresponds to a specific threshold range defined by the plurality of thresholds, some or all of N2 change, TRP index(es) change, and AI/ML model change may be performed according to a predefined method for the specific threshold range.

Although the above description has been given based on the assumption that an entity requesting updating/switching of an AI/ML model or reconfiguration of N2 is a UE, the scope of the present disclosure is not limited thereto, and the operations may also be performed by various other devices, such as a BS or a network node.

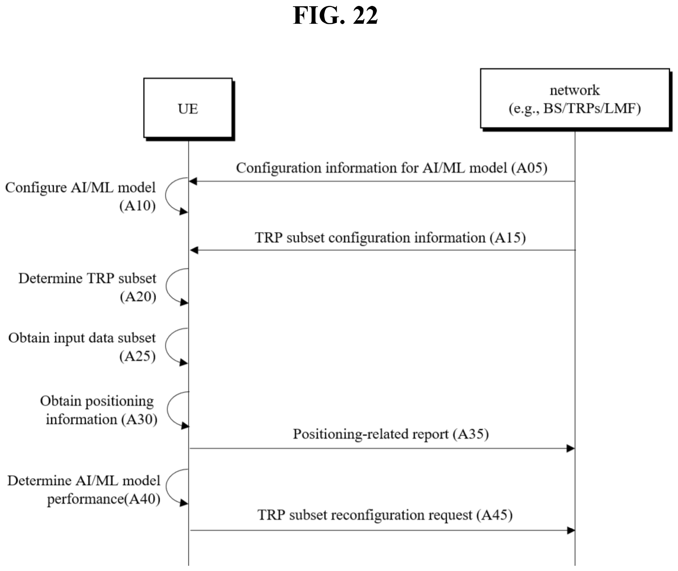

FIG. 22 is a diagram illustrating operations of a network and a UE according to an embodiment.

Referring to FIG. 22, the network may transmit a configuration for at least one AI/ML model related to a plurality of TRPs for positioning to the UE (A05).

The UE may configure the at least one AI/ML model related to the plurality of TRPs for positioning (A10).

The network may transmit a TRP subset configuration to the UE (A15). The TRP subset configuration may include at least one of a number of TRPs, TRP identification information, or TRP subset identification information.

The UE may determine a specific TRP subset from the plurality of TRPs based on the TRP subset configuration (A20). The TRP subset may be determined based on at least one of LoS/NLos information about each TRP, a signal measurement for each TRP, a zone where the UE is located, or a number of TRPs detectable by the UE.

The UE may obtain an input data subset based on the specific TRP subset (A25).

The UE may obtain positioning information output from the at least one AI/ML model based on the input data subset (A30).

The UE may transmit a positioning-related report to the network based on the positioning information (A35). The positioning-related report may include information about at least one of the specific TRP subset or the input data subset. For example, based on the specific TRP subset including a number of TRPs different from the number of TRPs included in the TRP subset configuration, the positioning-related report may include at least one of the number of TRPs included in the specific TRP subset or TRP identification information.

The UE may determine the performance of the at least one AI/ML model based on the positioning information output from the at least one AI/ML model (A40).

The UE may transmit a message for a reconfiguration request for the TRP subset to the network, based on the determined performance of the at least one AI/ML model being less than or equal to a threshold (A45).

Based on the reconfiguration request for the TRP subset including a change in the total number of TRPs included in the TRP subset, the message may further include a request for switching or updating of the at least one AI/ML model.

Based on a similarity between output distributions of the at least one AI/ML model before and after the reconfiguration of the TRP subset being equal to or greater than a specific level, the at least one AI/ML model may be maintained.

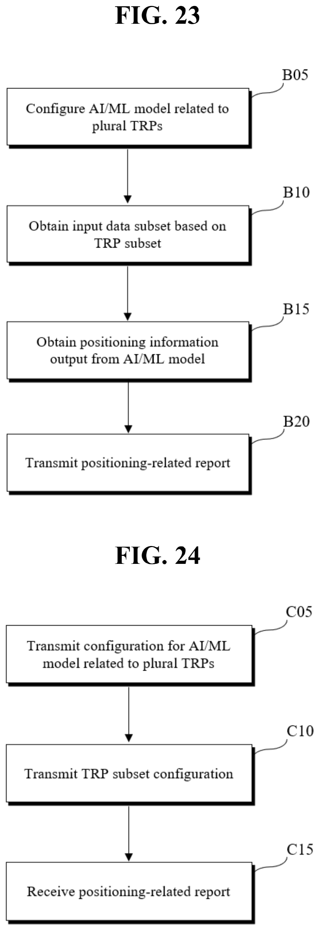

FIG. 23 is a diagram illustrating an operation of a UE according to an embodiment.

Referring to FIG. 23, the UE may configure at least one AI/ML model related to a plurality of TRPs for positioning (B05).

The UE may obtain an input data subset based on a TRP subset from the plurality of TRPs (B10).

The UE may obtain positioning information output from the at least one AI/ML model based on the input data subset (B15).

The UE may transmit a positioning-related report to a network based on the positioning information (B20).

The positioning-related report may include information about at least one of the TRP subset or the input data subset.

For example, the UE may receive a TRP subset configuration from the network. The TRP subset configuration may include at least one of a number of TRPs or TRP identification information.

Based on the TRP subset including a number of TRPs different from the number of TRPs included in the TRP subset configuration, the positioning-related report may include at least one of the number of TRPs included in the TRP subset or TRP identification information.

For example, the UE may select the TRP subset from among a plurality of TRP subsets based on TRP subset identification information received from the network.

The TRP subset may be determined based on at least one of LoS/NLos information about each TRP, a signal measurement for each TRP, a zone where the UE is located, or a number of TRPs detectable by the UE.

The UE may determine performance of the at least one AI/ML model based on the positioning information output from the at least one AI/ML model.

Based on the determined performance of the at least one AI/ML model being less than or equal to a threshold, the UE may transmit a message for a reconfiguration request for the TRP subset to the network.

Based on the reconfiguration request for the TRP subset including a change in a total number of TRPs included in the TRP subset, the message may further include a request for switching or updating of the at least one AI/ML model.

Based on a similarity between output distributions of the at least one AI/ML model before and after reconfiguration of the TRP subset being equal to or greater than a specific level, the at least one AI/ML model may be maintained.

FIG. 24 is a diagram illustrating an operation of a network node according to an embodiment. The network node may be a BS or a node having an LMF.

Referring to FIG. 24, the network node may transmit, to a UE, a configuration for at least one AI/ML model related to a plurality of TRPs for positioning (C05).

The network node may transmit a TRP subset configuration for the plurality of TRPs to the UE (C10). The TRP subset configuration may include at least one of a number of TRPs in the TRP subset or TRP identification information.

The network node may receive a positioning-related report including positioning information from the UE (C15). The positioning-related report may include information about at least one of an input data subset provided to the at least one AI/ML model to output the positioning information or a specific TRP subset related to the input data subset.

Based on the specific TRP subset including a number of TRPs different from the number of TRPs included in the TRP subset configuration, the positioning-related report may include at least one of the number of TRPs included in the TRP subset or TRP identification information.

For example, the BS may transmit TRP subset identification information for the specific TRP subset to the UE.

The specific TRP subset may be determined based on at least one of LoS/NLos information about each TRP, a signal measurement for each TRP, a zone where the UE is located, or a number of TRPs detectable by the UE.

The performance of the at least one AI/ML model may be determined based on the positioning information output from the at least one AI/ML model.

Based on the performance of the at least one AI/ML model being less than or equal to a threshold, the network node may receive a message for a reconfiguration request for the TRP subset from the UE.

Based on the reconfiguration request for the TRP subset including a change in a total number of TRPs included in the TRP subset, the message may further include a request for switching or updating of the at least one AI/ML model.

Based on a similarity between output distributions of the at least one AI/ML model before and after reconfiguration of the TRP subset being equal to or greater than a specific level, the at least one AI/ML model may be maintained.

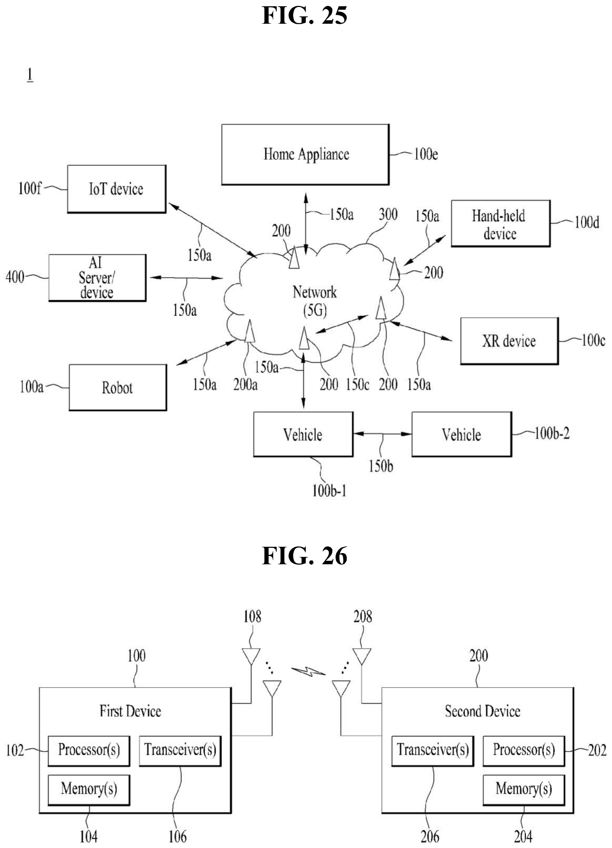

FIG. 25 illustrates a communication system 1 applied to the disclosure.

Referring to FIG. 25, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 26 illustrates wireless devices applicable to the disclosure.

Referring to FIG. 26, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 25.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

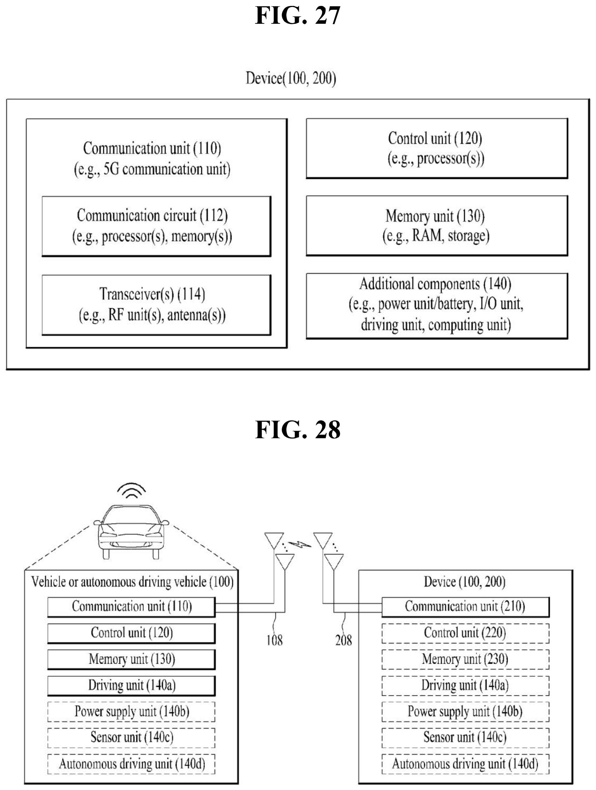

FIG. 27 illustrates another example of a wireless device applied to the disclosure. The wireless device may be implemented in various forms according to a use-case/service (refer to FIG. 25).

Referring to FIG. 27, wireless devices 100 and 200 may correspond to the wireless devices 100 and 200 of FIG. 26 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 26. For example, the transceiver(s) 114 may include the one or more transceivers 106 and 206 and/or the one or more antennas 108 and 208 of FIG. 26. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast terminal, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 28 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 28, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 27, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The disclosure is applicable to UEs, BSs, or other apparatuses in a wireless mobile communication system.

**Claims**

1.    A method performed by a user equipment (UE) in a wireless communication system, the method comprising:

configuring at least one artificial intelligence/machine learning (AI/ML) model related to a plurality of transmission and reception points (TRPs) for positioning;
obtaining an input data subset based on a TRP subset from the plurality of TRPs;
obtaining positioning information output from the at least one AI/ML model based on the input data subset; and
transmitting a positioning-related report to a network based on the positioning information,
wherein the positioning-related report includes information about at least one of the TRP subset or the input data subset.

**2.** The method of claim 1, further comprising:

receiving a TRP subset configuration from the network,
wherein the TRP subset configuration includes at least one of a number of TRPs or TRP identification information.

**3.** The method of claim 2, wherein based on the TRP subset including a number of TRPs different from the number of TRPs included in the TRP subset configuration, the positioning-related report includes at least one of the number of TRPs included in the TRP subset or TRP identification information.

**4.** The method of claim 1, wherein the UE selects the TRP subset from among a plurality of TRP subsets based on TRP subset identification information received from the network.

**5.** The method of claim 1, wherein the TRP subset is determined based on at least one of line-of-sight/non-line-of-sight (LoS/NLos) information about each TRP, a signal measurement for each TRP, a zone where the UE is located, or a number of TRPs detectable by the UE.

**6.** The method of claim 1, further comprising:

determining performance of the at least one AI/ML model based on the positioning information output from the at least one AI/ML model; and
based on the determined performance of the at least one AI/ML model being less than or equal to a threshold, transmitting a message for a reconfiguration request for the TRP subset to the network.

**7.** The method of claim 6, wherein based on the reconfiguration request for the TRP subset including a change in a total number of TRPs included in the TRP subset, the message further includes a request for switching or updating of the at least one AI/ML model.

**8.** The method of claim 6, wherein based on a similarity between output distributions of the at least one AI/ML model before and after reconfiguration of the TRP subset being equal to or greater than a specific level, the at least one AI/ML model is maintained.

**9.** A computer-readable recording medium recorded thereon a program for performing the method of claim 1.

**10.** An apparatus for wireless communication, the apparatus comprising:

a memory storing instructions; and
a processor performing operations by executing the instructions,
wherein the operations of the processor include:

configuring at least one artificial intelligence/machine learning (AI/ML) model related to a plurality of transmission and reception points (TRPs) for positioning;
obtaining an input data subset based on a TRP subset from the plurality of TRPs;
obtaining positioning information output from the at least one AI/ML model based on the input data subset; and
transmitting a positioning-related report to a network based on the positioning information, and
wherein the positioning-related report includes information about at least one of the TRP subset or the input data subset.

**11.** The apparatus of claim 10, further comprising:

a transceiver transmitting or receiving a wireless signal under control of the processor,
wherein the apparatus is a user equipment (UE) operating in a wireless communication system.

**12.** The apparatus of claim 10, wherein the apparatus is a processing device configured to control a UE operating in a wireless communication system.

13. A method performed by a network node in a wireless communication system, the method comprising:

transmitting, to a user equipment (UE), a configuration for at least one artificial intelligence/machine learning (AI/ML) model related to a plurality of transmission and reception points (TRPs) for positioning;
transmitting a TRP subset configuration for the plurality of TRPs to the UE; and
receiving a positioning-related report including positioning information from the UE,
wherein the positioning-related report includes information about at least one of an input data subset provided to the at least one AI/ML model to output the positioning information or a TRP subset related to the input data subset.

14. A network node in a wireless communication system, the network node comprising:

a memory storing instructions; and
a processor performing operations by executing the instructions,
wherein the operations of the processor include:

transmitting, to a user equipment (UE), a configuration for at least one artificial intelligence/machine learning (AI/ML) model related to a plurality of transmission and reception points (TRPs) for positioning;
transmitting a TRP subset configuration for the plurality of TRPs to the UE; and
receiving a positioning-related report including positioning information from the UE, and
wherein the positioning-related report includes information about at least one of an input data subset provided to the at least one AI/ML model to output the positioning information or a TRP subset related to the input data subset.

15. The network node of claim 14, wherein the network node is a base station (BS) or a node having a location management function (LMF).

# FIG. 1

Initial Cell Search — PSS/SSS & [DLRS] & PBCH — S101

System Information Reception — PDCCH/PDSCH (BCCH) — S102

Random Access Procedure — PRACH (S103) — PDCCH/PDSCH (S104) — PRACH (S105) — PDCCH/PDSCH (S106)

General DL/UL Tx/Rx — S108 — PDCCH/PDSCH (S107) — PUSCH/PUCCH
- DL/UL ACK/NACK
- UE CQI/PMI/Rank Report using PUSCH and PUCCH

# FIG. 2

One Frame (10ms)

Half-Frame (5ms) | Half-Frame (5ms)

Subframe 0 (1ms) ...... Subframe 4 (1ms) | Subframe 5 (1ms) ...... Subframe 9 (1ms)

Subframe (1ms)

15KHz — Slot (14 symbols) — 1ms

30KHz — Slot 0 (14 symbols) | Slot 1 — 500us

60KHz — Slot 0 (14 symbols) | Slot 1 | Slot 2 | Slot 3 — 250us

120KHz — Slot 0 (14 symbols) | Slot 1 | Slot 2 | Slot 3 | Slot 4 | Slot 5 | Slot 6 | Slot 7 — 125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

# FIG. 9

# FIG. 10

# FIG. 11

4 Feature Maps

Input Image 36 X 36

28 X 28

14 X 14

Convolution
(Kernel: 9X9X1)

Max Pooling

# FIG. 12

Encoder  Decoder

# FIG. 13

Terminal device part
(Split AI operation/model)

Network part
(Split AI operation/model)

Actor

Intermediate data

Inference output

Terminal device

Network AI terminal device

# FIG. 14

# FIG. 15

# FIG. 16

# FIG. 17

UE                                    RAN Node

1. Training data

2. Model training

3. Model deployment/update

4. Inference data

5. Model inference

6. Model performance feedback

7. Action

8. Feedback

# FIG. 18

| AI/ML model fine-tunning | AI/ML model update | New AI/ML model |

T1                        T2                    data distrubution

**FIG. 19**

**FIG. 20**

# FIG. 21

# FIG. 22

## FIG. 23

B05

Configure AI/ML model related to plural TRPs

B10

Obtain input data subset based on TRP subset

B15

Obtain positioning information output from AI/ML model

B20

Transmit positioning-related report

## FIG. 24

C05

Transmit configuration for AI/ML model related to plural TRPs

C10

Transmit TRP subset configuration

C15

Receive positioning-related report

# FIG. 25

# FIG. 26

# FIG. 27

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 28

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
|---|
| **PCT/KR2024/004056** |

| A. | CLASSIFICATION OF SUBJECT MATTER |
|---|---|

**H04W 24/02**(2009.01)i; **H04W 24/04**(2009.01)i; **G06N 20/00**(2019.01)i

According to International Patent Classification (IPC) or to both national classification and IPC

| B. | FIELDS SEARCHED |
|---|---|

Minimum documentation searched (classification system followed by classification symbols)

H04W 24/02(2009.01); G06N 3/02(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: multiple TRP, TRP subset, input data subset, AI/ML modeling, positioning data, LoS/NLoS, LMF, report

| C. | DOCUMENTS CONSIDERED TO BE RELEVANT |
|---|---|

| Category* | Citation of document, with indication, where appropriate, of the relevant passages | Relevant to claim No. |
|---|---|---|
| A | ERICSSON. Other Aspects of AI/ML Based Positioning Enhancement. R1-2300142, 3GPP TSG-RAN WG1 Meeting #112. Athens, Greece. 18 February 2023.<br>See sections 3.1.1 and 3.5.4. | 1-15 |
| A | OPPO. Evaluation methodology and preliminary results on AI/ML for positioning accuracy enhancement. R1-2302544, 3GPP TSG RAN WG1 #112bis-e, e-Meeting. 07 April 2023.<br>See section 2.1. | 1-15 |
| A | ERICSSON. Other Aspects of AI/ML Based Positioning Enhancement. R1-2302336, 3GPP TSG-RAN WG1 Meeting #112bis-e, e-Meeting. 08 April 2023.<br>See sections 2-4. | 1-15 |
| A | VIVO. Evaluation on AI/ML for positioning accuracy enhancement. R1-2302481, 3GPP TSG RAN WG1 #112bis-e, e-Meeting. 07 April 2023.<br>See sections 3-3.2.3. | 1-15 |
| A | WO 2022-187627 A1 (IOT HOLDINGS, INC.) 09 September 2022 (2022-09-09)<br>See paragraphs [0177]-[0183]; and claim 1. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/004056**

| Patent document cited in search report | | | Publication date (day/month/year) | Patent family member(s) | | | Publication date (day/month/year) |
|---|---|---|---|---|---|---|---|
| WO | 2022-187627 | A1 | 09 September 2022 | CN | 117136522 | A | 28 November 2023 |
| | | | | EP | 4302448 | A1 | 10 January 2024 |
| | | | | US | 2024-0012087 | A1 | 11 January 2024 |

Form PCT/ISA/210 (patent family annex) (July 2022)